# EUROPEAN PATENT APPLICATION

(11) **EP 4 764 430 A1**
(43) Date of publication of application: **24.06.2026**
(21) Application number: 24222464.0
(22) Date of filing: 20.12.2024
(51) Int. Cl.: G01J 1/42, G01J 1/44

(54) **MULTI-PIXEL SUPERCONDUCTING NANOWIRE SINGLE-PHOTON DETECTOR**

(71) Applicant: ID Quantique S.A., 1227 Genève (CH)
(72) Inventor: GRAS, Gaëtan, 74000 Annecy (FR)
(74) Representative: Kraus & Lederer PartGmbB

(57) **Abstract**

The present invention relates to a multi-pixel superconducting nanowire single-photon detector (2000, 3000) comprising a first fractal superconducting nanowire single-photon detector (2100) comprising a first superconducting nanowire (2110) extending between a first start terminal (2120) and a first end terminal (2121) across a first area (A1), a second fractal superconducting nanowire single-photon detector (2200) comprising a second superconducting nanowire (2210) extending between a second start terminal (2220) and a second end terminal (2221) across a second area (A2), wherein the second area (A2) overlaps with the first area (A1).

## Description

The present invention relates to the field of photon detectors, and in particular to single-photon detectors.

### Background of the invention

Multi-pixel Superconducting Nanowire Single-Photon Detectors (SNSPD) are known, in which several pixels, made by superconducting nanowires, are illuminated by a single optical source, such as a single optical fiber. This is particularly advantageous as the output of the various pixels, all excited by the same light source, can be combined in various manners to optimize the resolution of the detector.

Such detectors are known, for instance, from article *"*Approaching linear photon number resolution with superconductor nanowire array" by B. Zhang, Q. Chen, L. Zhang, R. Ge, J. Tan, X. Li, X. Jia, L. Kang, and P. Wu in Applied Physics B 126, 1 (2020), or article *"*Gigahertz Detection Rates and Dynamic Photon-Number Resolution with Superconducting Nanowire Arrays" by Giovanni V. Resta, Lorenzo Stasi, Matthieu Perrenoud, Sylvain El-Khoury, Tiff Brydges, Rob Thew, Hugo Zbinden, and Félix Bussières in Nano Letters 2023 23 (13), 6018-6026.

Depending on the implementation of the pixels, multi-pixel SNSPD can be polarization sensitive. That is, the photon sensitivity can depend on the polarization of the light reaching the detector. This is generally not ideal.

Various designs for a single pixel detector are known, which are insensitive to polarization, such as spiral SNSPD and fractal SNSPD.

Spiral SNSPD are known, from instance, from the article *"*Detection Efficiency of a Spiral-Nanowire Superconducting Single-Photon Detector" by D. Henrich et al., in IEEE Transactions on Applied Superconductivity, vol. 23, no. 3, pp. 2100405-2100405, June 2013. Fractal SNSPD are known, from instance, from patent application WO 2022/095177 A1.

As can be seen in WO 2022/095177 A1, a single fractal SNSPD detector is known to occupy a given area, schematically referred to as A.

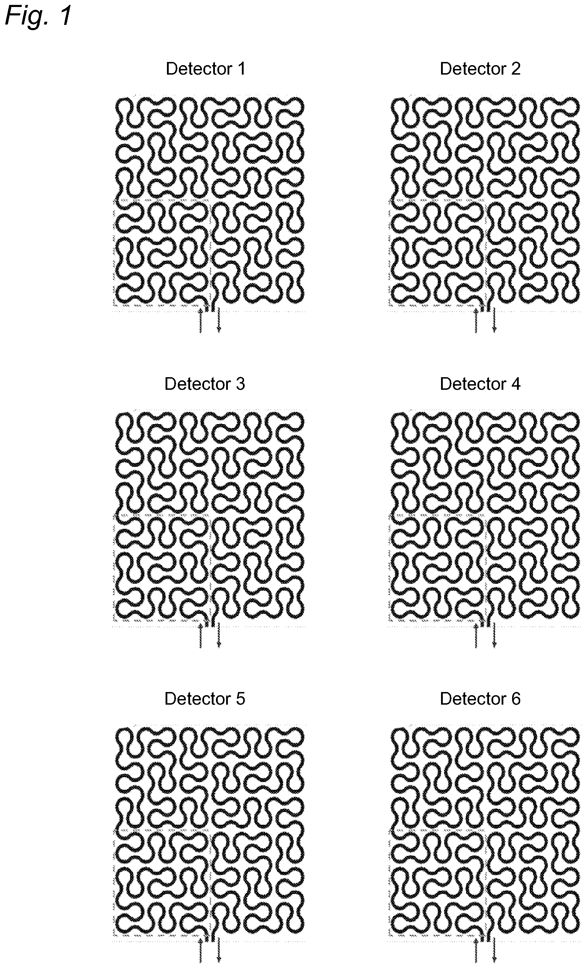

When a plurality N of such pixels are needed for a multi-pixel detector, Figure 1 schematically illustrates a potential implementation of a multi-pixel SNSPD comprising a plurality of, namely six in the exemplary implementation, fractal detectors known from WO 2022/095177 A1. In this case, the total area of the multi-pixel detector becomes at least N x A.

That is, as can be derived from figure 1, the use of a known design for each pixel in a multi-pixel SNSPD presents the disadvantage that the complete area of the multi-pixel SNSPD, formed by the sum of the areas of each single fractal pixel, is rather large. This results in a lower yield in manufacturing and increased costs.

Moreover, due to the size of the area of each single fractal pixel, the single fractal pixels would be spaced relatively far apart, which might lead to different illumination of the pixels. Such different illumination could lead to mistakes in detection and/or increased susceptibility to attacks. The nonuniform light distribution over the different pixels negatively impacts the photon-number resolving capability of the detector.

Even further, due to the need of providing connections to the various pixels, connection lines routed between the pixels would lead to an increase in complexity of the design.

### Summary of the invention

The inventors have generally identified a geometry for a multi-pixel SNSPD, which enables the use of fractal detectors for the pixels, without the drawbacks of the implementation of figure 1.

The invention is defined by the claims.

In accordance with a preferred embodiment, a multi-pixel superconducting nanowire single-photon detector is provided, comprising a first fractal superconducting nanowire single-photon detector comprising a first superconducting nanowire extending between a first start terminal and a first end terminal across a first area, a second fractal superconducting nanowire single-photon detector comprising a second superconducting nanowire extending between a second start terminal and a second end terminal across a second area, wherein the second area overlaps with the first area.

In some preferred embodiments, at least 50%, preferably at least 75%, even more preferably at least 90% of the second area overlaps with the first area.

In some preferred embodiments, the first area includes the second area.

In some preferred embodiments, the first fractal superconducting nanowire single-photon detector and the second fractal superconducting nanowire single-photon detector extend over the overlapping area in an interleaved manner.

In some preferred embodiments, the first superconducting nanowire comprises a plurality of first segments, the second superconducting nanowire comprises a plurality of second segments, wherein, for at least a majority of the first segments, and/or for segments forming at least a majority of the length of the first superconducting nanowire, a given second segment is parallel to a given first segment.

In some preferred embodiments, a segment is defined as any of:
- a straight line from a first point to a second point of the superconducting nanowire
- a curved line from a first point to a second point of the superconducting nanowire, wherein, for the definition of the curved line any of the first point and second point is
   ∘ an inflection point from concave to convex, or
   ∘ a non-differentiable point, or
   ∘ a beginning or end of a straight line.

In some preferred embodiments, for at least a majority of the first segments, and/or for segments forming at least a majority of the length of the first superconducting nanowire, a distance between the given second segment and the respectively given parallel first segment is less than 200nm, preferably less than 150nm, even more preferably less than 120nm and/or more than 20nm, preferably more than 45 nm, even preferably more than 70 nm.

In some preferred embodiments, the first superconducting nanowire comprises a plurality of first segments, wherein the first segments comprise a plurality of couples of segments having at least a majority of the length of one, preferably both, segments substantially parallel to each other without other first segments placed in between the couple, wherein a distance between two segments of a given couple is at least sufficient for routing the second superconducting nanowire twice.

In some preferred embodiments, the multi-pixel superconducting nanowire single-photon detector further comprises one or more further fractal superconducting nanowire single-photon detectors, wherein the distance between two segments of the given couple is at least sufficient for routing the second superconducting nanowire, and the one or more further fractal superconducting nanowire single-photon detectors, twice.

In some preferred embodiments, the first fractal superconducting nanowire single-photon detector defines a first plurality of concave regions and convex regions, the second fractal superconducting nanowire single-photon detector defines a second plurality of concave regions and convex regions, wherein, for at least a majority of the first plurality of concave regions and of the convex regions, and/or for at least the concave regions and the convex regions corresponding to a majority of the length of the first superconducting nanowire, a given second concave region or convex region overlaps with a given first concave region or, respectively, convex region.

In some preferred embodiments, each concave region or convex region is defined by a circular arc, having a center and an angle,
- defined by two consecutive segments, if both segments are straight lines,
- defined by a circular interpolation of a curved line from a first point to a second point, wherein any of the first point and second point is
   ∘ an inflection point from concave to convex, or
   ∘ a non-differentiable point, or
   ∘ a beginning or end of a straight line.
   and regions are considered overlapping if the respective angles are substantially similar and/or if the respective centers are at a maximum distance of less than 200nm, preferably less than 150nm, even more preferably less than 120nm and/or more than 20nm, preferably more than 45 nm, even preferably more than 70 nm.

In some preferred embodiments, the first superconducting nanowire separates the first area into
- an internal area, on a first side of the first superconducting nanowire, and
- an external area, on a second side of the first superconducting nanowire, opposite to the first side,
wherein the internal area has a larger overlap with the first area than the external area, and wherein a majority of the second fractal superconducting nanowire single-photon detector is placed in the internal area.

### Brief description of the drawings

Figure 1 schematically illustrates a potential implementation of a multi-pixel SNSPD comprising a plurality of fractal detectors;
Figure 2A schematically illustrates a fractal superconducting nanowire single-photon detector 2100, and an enlarged portion thereof;
Figure 2B schematically illustrates a fractal superconducting nanowire single-photon detector 2200, and an enlarged portion thereof;
Figure 2C schematically illustrates a multi-pixel superconducting nanowire single-photon detector 2000 comprising detectors 2100 and 2200, and an enlarged portion thereof;
Figure 2D schematically illustrates a further implementation of multi-pixel superconducting nanowire single-photon detector 2000 comprising fractal detectors 2100 and 2200, as well as further fractal detectors 2300, 2400, 2500, and an enlarged portion thereof;
Figure 2E schematically illustrates a further implementation of multi-pixel superconducting nanowire single-photon detector 2000 comprising yet further fractal detectors in comparison with figure 2D, and an enlarged portion thereof;
Figure 3A schematically illustrates a fractal superconducting nanowire single-photon detector 3200, and an enlarged portion thereof;
Figure 3B schematically illustrates a multi-pixel superconducting nanowire single-photon detector 3000 comprising detectors 2100 and 3200, and an enlarged portion thereof;
Figure 4 schematically illustrates a plurality of segments and their start and end points;
Figure 5A schematically illustrates the enlarged portion of figures 2A and 2B so as to illustrates respective concave and convex regions;
Figure 5B schematically illustrates an enlarged portion of alternative implementations of fractal detectors so as to illustrate respective concave and convex regions;
Figure 6A schematically illustrates an internal area AI defined by the fractal superconducting nanowire single-photon detector 2100;
Figure 6B schematically illustrates an external area AE defined by the fractal superconducting nanowire single-photon detector 2100.

### Detailed description of preferred embodiments

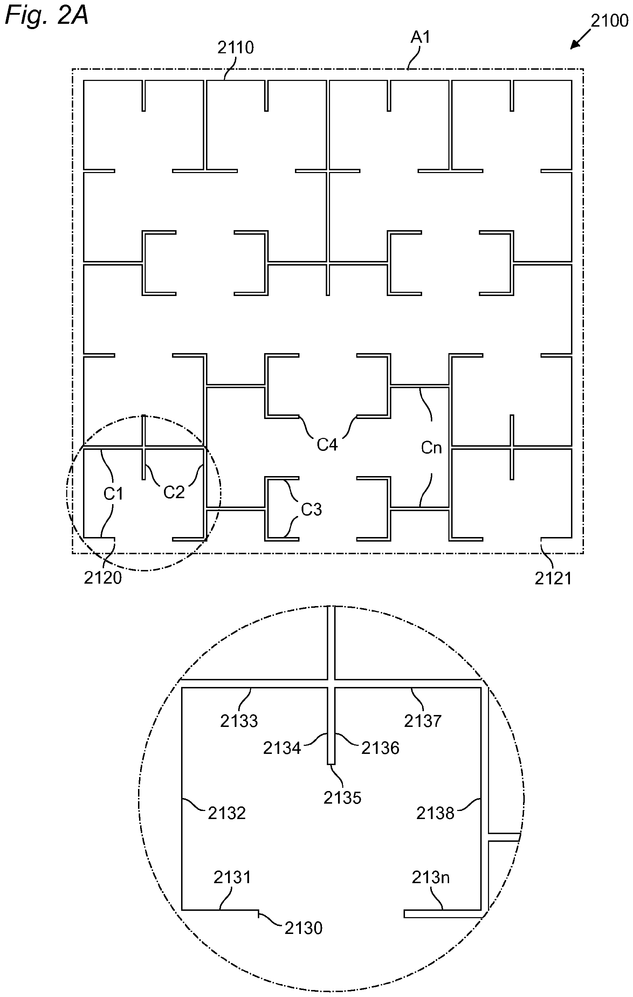

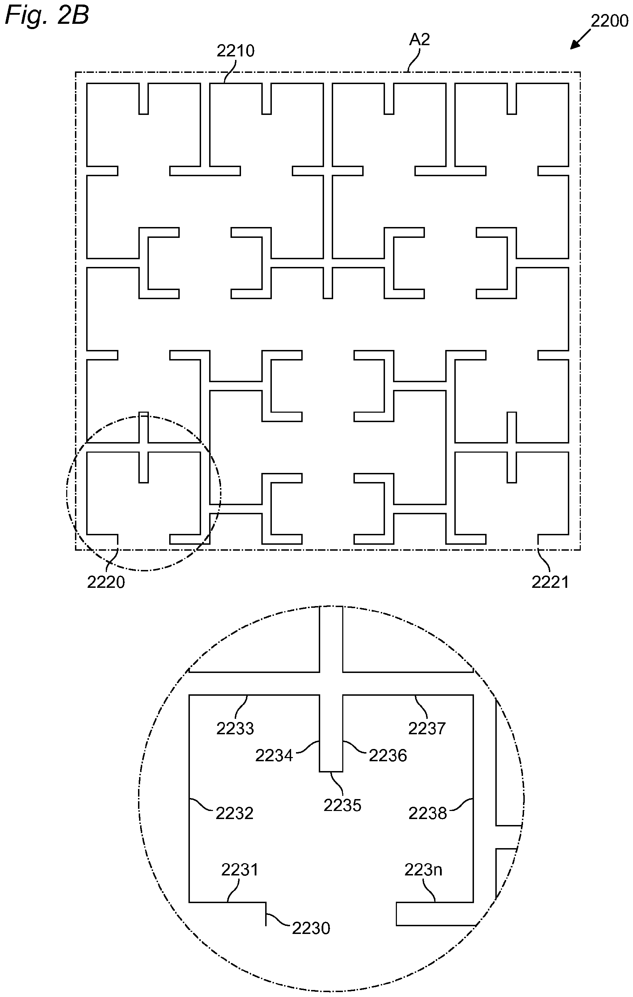

Figure 2A schematically illustrates a fractal superconducting nanowire single-photon detector 2100, and an enlarged portion thereof. This will be referred to, in the following, as first fractal superconducting nanowire single-photon detector, or, more simply, detector 2100. Similarly, figure 2B schematically illustrates a fractal superconducting nanowire single-photon detector 2200, and an enlarged portion thereof. This will be referred to, in the following, as second fractal superconducting nanowire single-photon detector, or, more simply, detector 2200.

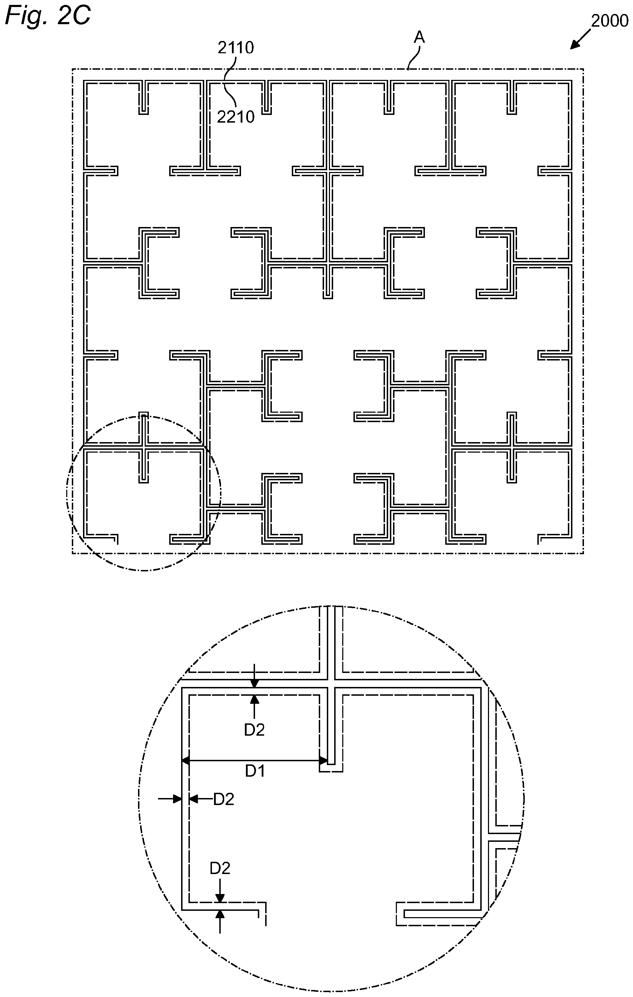

Figure 2C schematically illustrates a multi-pixel superconducting nanowire single-photon detector 2000 comprising detectors 2100 and 2200, and an enlarged portion thereof.

As can be seen in figure 2C, the multi-pixel superconducting nanowire single-photon detector 2000 comprises the first fractal superconducting nanowire single-photon detector 2100 and the second fractal superconducting nanowire single-photon detector 2200.

In general, as will become more evident from the following description, the invention relates to the concept of having each of the first detector 2100 and of the second detector 2200 developing as a fractal curve, or a space-filling curve, on substantially the same area A, preferably in an interleaved manner.

In the embodiment illustrated in figures 2A-2C, the first fractal superconducting nanowire single-photon detector 2100 comprises a first superconducting nanowire 2110 extending between a first start terminal 2120 and a first end terminal 2121 across a first area A1. Preferably, the first superconducting nanowire 2110 extends as a fractal curve, or a space-filling curve, between the first start terminal 2120 and the first end terminal 2121. Similarly, the second fractal superconducting nanowire single-photon detector 2200 comprises a second superconducting nanowire 2210 extending between a second start terminal 2220 and a second end terminal 2221 across a second area A2. Preferably, the second superconducting nanowire 2210 extends as a fractal curve, or a space-filling curve, between the second start terminal 2220 and the first end terminal 2221.

In this embodiment, the second area A2 overlaps with the first area A1, as can be seen in figure 1C. Preferably, the second area A2 is completely contained in the first area A1. Thanks to this implementation, the first detector 2100 and of the second detector 2200 develop substantially on the same area A, as opposed to each one developing on its own area, as illustrated in figure 1. This leads to a better utilization of the available area as well as to better detecting performances, as the first detector 2100 and the second detector 2200 are evenly illuminated. This, in turn, enables a multi-pixel superconducting nanowire single-photon detector 2000 which is less prone to attacks.

It will be clear to those skilled in the art that there are several manners for enabling the first detector 2100 and the second detector 2200 to extend on the same area A, and that the illustrated embodiments, in any of the figures of the present application and specifically in figures 2A-2C currently being discussed, are only intended as an example.

Preferably, in some embodiments, the first detector 2100 and the second detector 2200 extend each as a line, not necessarily straight, comprising a plurality of straight and/or curved segments, between the respective start and end terminal. Further alternatively, or in addition, the first detector 2100 and the second detector 2200 extend such that the respective lines do not cross each other.

Still alternatively, or in addition, the first detector 2100 and the second detector 2200 are configured such that, when the area A is divided in N equal parts, with N being equal to 2, preferably any number between 2 and 4, more preferably between 2 and 9, even more preferably between 2 and 25, further more preferably between 2 and 36, each of the first detector 2100 and of the second detector 2200 crosses each of the N parts of the area A. In other terms, both detectors are configured to extend across all parts of the area A, as opposed to, say, the first detector being limited to a first part of the area A only, with the second detector extending across the whole area A or only across a part of the area complementary to the first area A.

Further alternatively, or in addition, the first detector 2100 and the second detector 2200 are configured such that, when the area A is divided in N equal parts as described above, each part N comprises a first length of the first detector 2100 and a second length of the second detector 2200, wherein a difference between those length is less than 50% of the first length, preferably less than 30% of the first length, even more preferably less than 15% of the first length. This ensures that both detectors 2100, 2200, independently of their specific form, extend in a manner sufficiently distributed over the entire area, and in similar length over a given part of the area, so as to enable a uniform illumination of the detectors across the entire area.

In preferred embodiments, at least 50%, preferably at least 75%, even more preferably at least 90% of the second area A2 overlaps with the first area A1. Alternatively, or in addition, in preferred embodiments the first area A1 includes the second area A2.

The skilled person will be aware of several manners, in fact infinite manners, with which two detectors 2100, 2200 can be implemented, such that they satisfy one of more, or all, of the requirements above. In the embodiment illustrated in figures 2A-2D, this is achieved by the first fractal superconducting nanowire single-photon detector 2100 and the second fractal superconducting nanowire single-photon detector 2200 extending over the overlapping area A in an interleaved manner.

The concept of interleaved can be better understood with reference to the figures, not only figures 2A-2D, and with reference to the embodiments described above and/or to those which will be described more in details in the following description.

In one possible implementation, the concept of interleaved can be understood as the detectors 2100, 2200 having a plurality of segments, with a majority of the segments of the second detector 2200 being parallel to respectively corresponding segments of the first detector. That is, for a plurality of the segments of second detector 2200, there is a biunivocal correspondence of a segment of the second detector 2200 with a segment of the first detector 2100, with the two segments being parallel to each other and/or facing each other and/or being proximate to each other. Here, proximate to each other can be understood to mean that no other segment is placed between them. In some embodiments, the majority of the segments can be understood to mean 50% plus one, preferably 65%, even more preferably 80%. Those concepts are best understood with reference to the enlarged views in figures 2A-2D.

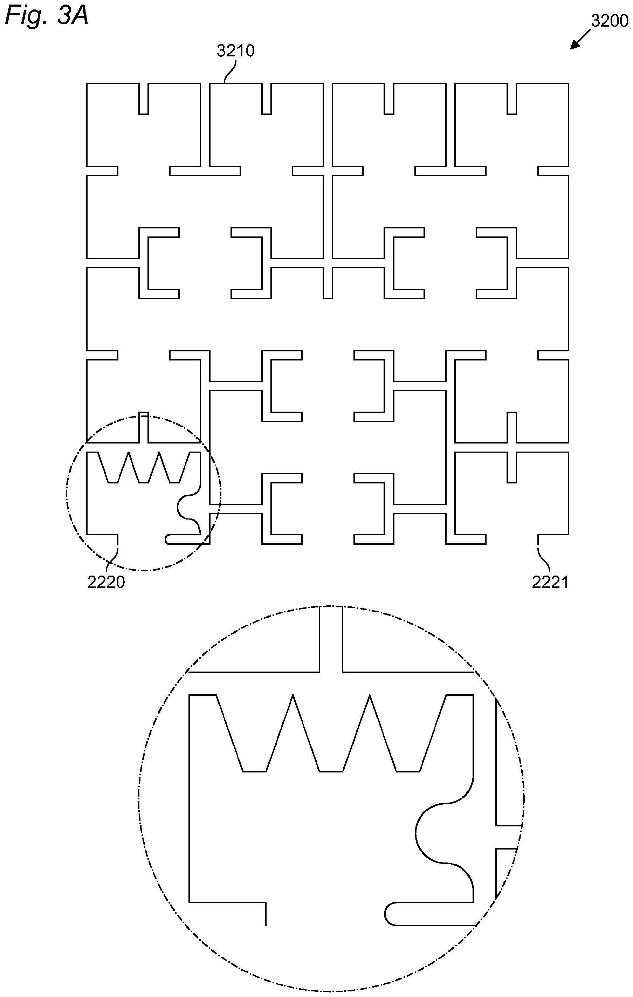

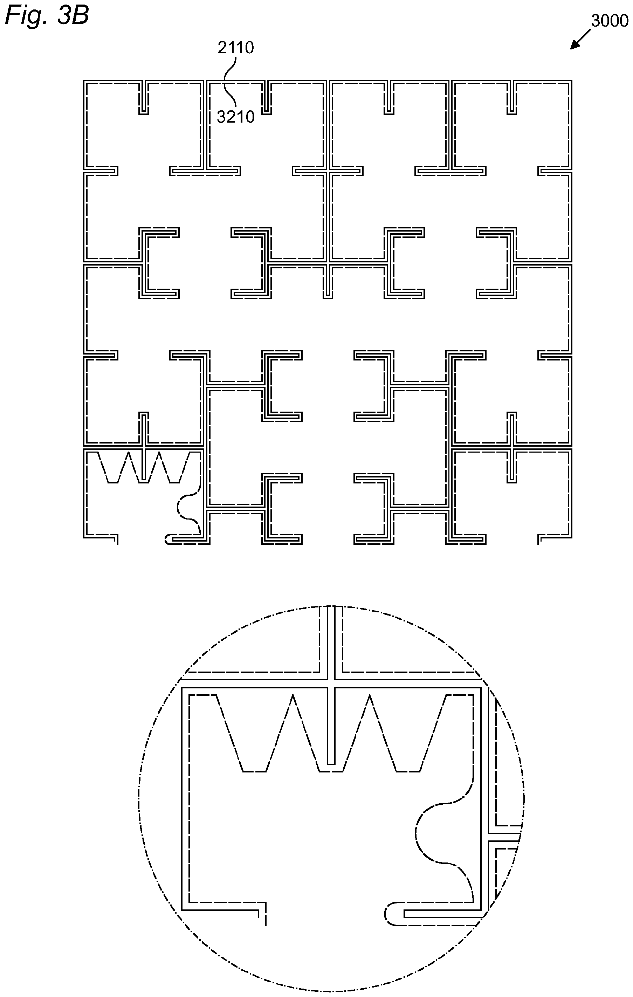

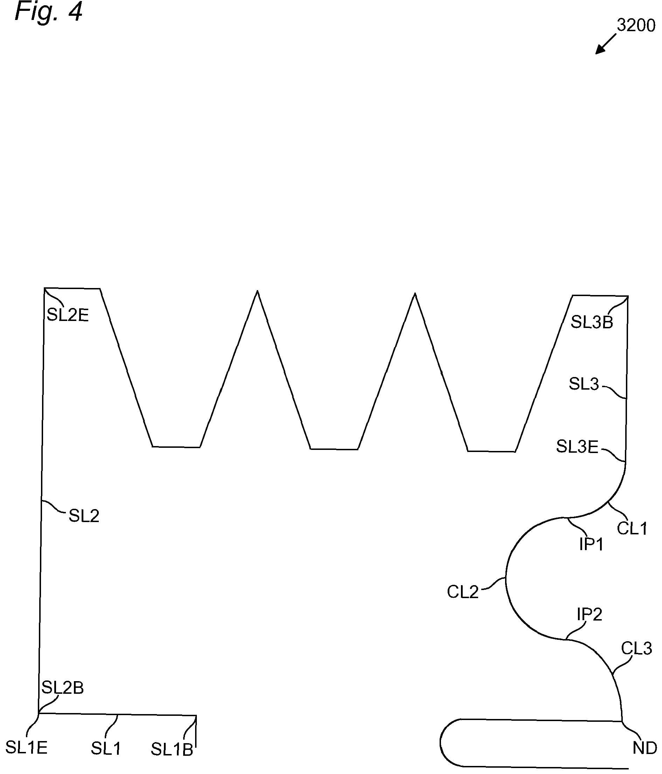

In particular, as can be seen in the enlarged portion of figure 2A, the first superconducting nanowire 2110 comprises, or, preferably, is composed of, a plurality of first segments 2130-213n. Similarly, as visible in the enlarged portion of figure 2B, the second superconducting nanowire 2210 comprises or, preferably, is composed of, a plurality of second segments 2230-223n. While in figures 2A and 2B those segments are exclusively straight lines, for ease of representation, the present invention is not limited thereto and any segment can also comprise, or only consist of, rounded lines, as visible for instance in figures 3A, 3B and 4. For a given conductor, the respective segments are connected to each other, so as to provide a single, continuous, path between the start and end terminal.

For at least a majority of the first segments 2130-213n of the first conductor, a given second segment 2230-223n of the second conductor is parallel to a given first segment 2130-213n. For instance, with reference to the embodiment of figures 2A and 2B, the segment 2130 is parallel to the segment 2230, the segment 2131 is parallel to the segment 2231, the segment 2132 is parallel to the segment 2232, etc. The parallelism of the various segments allows the two fractal detectors 2100, 2200 to be implemented in an interleaved manner while occupying an overlapping area. In particular, by running parallel to each other, in a manner similar to train tracks, the two detectors can cover the same area in a similar manner, which prevents one detector covering a part of the area more, or less, than the other detector. Additionally, most of the area can be covered by the detectors, which allows avoiding blind spots. Moreover, the parallelism of the detectors reduces the risk of the detectors touching each other, which might lead to manufacturing and/or operational issues.

A concept similar as above can apply not to the majority of the segments, in numerical terms, but for segments, preferably all, comprised in at least a majority of the length of the respective superconducting nanowire. That is, for instance, the first superconducting nanowire 2110 comprises a plurality of segments, of various length. By taking a subset of those segments, not necessarily all connected in a single line, a majority of the length of the first superconducting nanowire 2110 can be defined.

For instance, with reference to the enlarged portion illustrated in figure 2A, and considering the first superconducting nanowire 2110 to extend only across segments 2130-2135, that is, for a total of six segments, a numerical majority of the segments can be defined by four segments 2130, 2131, 2134, and 2135. Those four segments represent a numerical majority of the entire six segments but they do not represent a majority of the length of the first superconducting nanowire 2110 extending only across segments 2130-2135. On the contrary, for instance, the two segments 2132, 2133 alone, while representing a numerical minority of the total six segments, form a majority of the length of the first superconducting nanowire 2110.

Thus, throughout this application, whenever the majority of segments is defined, possibly with a value, this can be understood to be the numerical majority with the value indicating the percentage of the segments over the entire number of segments. Alternatively, or as an additional criteria combinable with the numerical one, the majority of segments can be understood to mean segments forming a majority of the length of the superconducting nanowire, not necessarily being connected to each other, with the value indicating the ratio of the sum of their length over the total length of the superconducting nanowire.

In the embodiment of figures 2A and 2B, all segments of the first segments 2130-213n comprise a correspondingly parallel second segment 2230-223n. It will, however, be clear that the invention is not limited thereto and it is sufficient that the parallelism apply for a plurality of the segments to achieve the technical effect described above.

For instance, if one or more second segments 2230-223n were not to be parallel to one or more first segments 2130-213n, the same inventive concept could be implemented. In particular, as visible in figure 3B, some segments of the first superconducting nanowire 2110 lack a correspondingly parallel segment in the second superconducting nanowire 3210. Nevertheless, advantages comparable to those described in conjunction with the embodiment of figures 2A-2D can be obtained. Thus, as long as a majority of the segments, and/or a majority of the length of the superconducting nanowires, is substantially parallel as described, the same advantages as above can be obtained.

Substantially parallel, in the context of the present application, can be understood to mean that, for two given segments, a majority of the length of one, preferably both, of the two given segment is parallel to the remaining segment, or differ in direction by less than 10 degrees, preferably by less than 5 degrees, compared to the remaining segment. Preferably, the majority of the length of a segment can be 51% of its length, more preferably 65%, even more preferably 80%. In the context of the description, any reference to parallel can be understood to mean substantially parallel as just described, or parallel.

While the embodiment of figures 2A and 2B has been described with two detectors 2100, 2200, the invention is not limited only to two such detectors. Any number of detectors equal to, or higher than, two can be implemented.

In particular, in any of the embodiments described above or below, the considerations made for the first and second detectors 2100, 2220, can apply for any other couple of detectors among a plurality of detector, and, preferably, for any couple of neighboring detectors. Neighboring detectors can be defined as two detectors which, when their segments are considered, present a majority of their segments placed next to respective segments of the other detector, without a segment of a third, different, detector being placed in-between. Alternatively, or in addition, neighboring detectors can be defined as two detectors which run parallel to each other without any other detector being placed between them. Alternatively, or in addition, given a plurality of detectors, two neighboring detectors can be identified by taking two parallel segments of two detectors, as previously described, and checking if any other segment is placed in between them. If this is not the case, for a majority of the couples of parallel segments of the two detectors, then the two detectors can be understood as being neighboring detectors.

Thus, for instance, with reference to figure 2C, the same considerations made for the couple defined by the first detector 2100 and the second detector 2200 can apply to the couple defined by the second detector 2200 and the third detector 2300, or to the couple defined by the third detector 2300 and the fourth detector 2400, or to the couple defined by the fourth detector 2400 and the fifth detector 2500, etc. As it can be seen, a given detector can be a neighboring detector of more than one other detector. For instance, second detector 2200 can be a neighboring detector of first detector 2100 but also of third detector 2300.

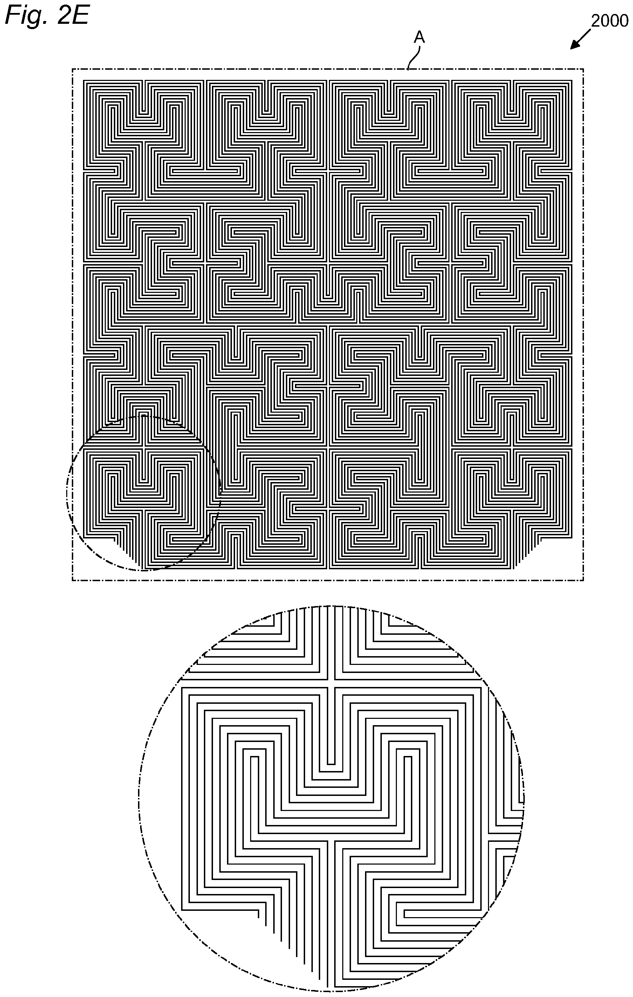

Figure 2E illustrates an embodiment with ten detectors. As can be seen, thanks to the interleaved placement of the detectors as discussed above, it is possible to obtain a uniform coverage of the area A and/or a uniform repartition of the length of the various detectors across the area A.

In the description above, reference has been generally made to a segment of the detectors. In the following, more details will be provided on a possible implementation of those segments with reference to figure 4.

In particular, in some embodiments, a segment can be defined as a straight line from a first point to a second point of the superconducting nanowire. In the illustrated example of figure 4, corresponding to the enlarged portion of figure 3A, three such straight lines SL1, SL2 and SL3 are identified by the corresponding reference numerals for better understanding. For instance, straight line SL1 can be defined from a first SL1B to a second point SL1E. Similarly straight line SL2 can be defined from a first point SL2B to a second point SL2E and straight line SL3 can be defined from a first point SL3B to a second point SL3E. Preferably, the first and/or second points are an end of the respective straight line. For instance, straight line SL1 ends being straight at point SL1B and SL1E.

Alternatively, or in addition, a segment can be defined as a curved line from a first point to a second point of the superconducting nanowire. The curvature needs not to be constant. In various embodiments, any of the first point and second point can be implemented by an inflection point IP1-IP2 from concave to convex, or a non-differentiable point ND, or a beginning SL1B-SL3B or end SL1E-SL3E of a straight line SL1-SL3.

An inflection point can be a point on a curved line where the curve changes its concavity, switching from concave to concave, or vice versa. In some implementations, at this point, the second derivative of the function equals zero, but the slope is not necessarily zero. In the illustrated example of figure 4, two such inflection points IP1 and IP2 are illustrated.

A non-differentiable point can be defined as a point where the derivative does not exist, for instance due to a sharp corner, cusp, or vertical tangent, causing a discontinuity or abrupt change in the slope. In the illustrated example of figure 4, one such non differentiable point ND is illustrated.

Thus, in the illustrated example of figure 4, three such curved lines are provided with reference numerals for better understanding. For instance, curved line CL1 can be defined from its beginning SL3E to its end IP1. Curved line CL2 can be defined from its beginning IP1 to its end IP2. Curved line CL3 can be defined from its beginning IP2 to its end ND.

Preferably, in some embodiments, a curved line can be defined to start at of the points discussed above and end at the first one of the points discussed above when moving across the line. Thus, for instance, when taking SL3E as beginning of a curved line, the curved line CL1 could be defined to continue until ND but, in preferred embodiments, since the point IP1 is encountered before, that can be considered as the end of CL1.

In addition to, or as an alternative of, the concept of parallelism described above, two detectors can be understood to be interleaved if, for a majority of their length, or for a majority of their segments, they are placed in close proximity to each other, preferably without another detector being placed in between them. This will be explained in the following.

As visible in figure 2C, in some preferred embodiments, a distance D2 can be defined between neighboring detectors, 2100-2500. In particular, distance D2 can be defined between a given segment of one detector and a corresponding, parallel, segment of a neighboring detector. In preferred embodiments, for at least a majority of the first segments 2130-213n, and/or for segments forming at least a majority of the length of the first superconducting nanowire, the distance D2 between a given second segment 2230-223n and the respectively given parallel first segment 2130-213n is less than 200nm, preferably less than 150nm, even more preferably less than 120nm and/or more than 20nm, preferably more than 45 nm, even preferably more than 70 nm. As discussed, this is not limited to the first and second detectors and can apply to the distance between a given segment of a detector and a respectively given parallel segment of a neighboring detector. It has been found by the inventors that those values result in two neighboring detectors being relatively close to each other, for a majority of their segments and/or of their length, so that it is possible to fit more detectors in the area A.

While the above embodiments have focused on the concept of segments are parallelism for providing an example of how the detectors can be interleaved, it will be clear to those skilled in the art that alternative definitions can be provided. In the following, and again with reference to figure 2A, the concept of interleaving will be described by reference to a curve which folds back on itself, creating folded regions, and describing more in details the characteristics of a space in between two such folding regions of a first, external, detector which enable those two folded regions to be sufficiently separated from each other for placing a second, internal, detector in between them.

In particular, as visible in figure 2A, the first superconducting nanowire 2110 comprises a plurality of first segments 2130-213n. The first segments 2130-213n comprise a plurality of couples C1-Cn of segments. A couple can be defined by two segments having at least a majority of the length of one, preferably both, segments parallel to each other without other first segments 2130-213n, of the first superconducting nanowire 2110, being placed in between the couple C1-Cn.

For instance, a first couple C1 can be defined by segments 2131 and 2133. Those two segments are parallel to each other and no other segment of the first superconducting nanowire 2110 is placed in between them. The entirety of the length of both segments 2131 and 2133 is parallel, in that they extend as lines in the same direction. When considering the parallelism to require the two segments to face each other, a majority, in fact the entirety, of segment 2131 faces a parallel section of segment 2133, so that the two segments can be considered to form a couple according to the definition given above.

In preferred embodiments, a single segment connecting the two segments of a couple can be excluded from the evaluation of segments being placed in between the two segments of the couple. There is, in fact, always at least one segment connecting two parallel segments which are separated from each other, and which is necessarily placed in between them. Thus, with reference to the couple C1, it is sufficient for the segments 2131 and 2133 to be parallel to each other with and no other segment of the first superconducting nanowire 2110 being placed in between them, with the exclusion of the segment 2132, which connects them. In preferred embodiment, a given segment can be considered to be placed in between two other parallel segments if, when a region of space is defined by the portion of the two segments being parallel and facing each other, the given segment, or parts of it, is placed in this region.

Similarly, a second couple C2 can be defined for segments 2136 and 2138, as they have no segments in between them, other than the one connecting them, segment 2137.

As an example of a non-couple, segments 2132 and 2138 will be considered. Segments 2132 and 2138 are parallel to each other and also face each other, for a majority of their length. However, in between them, various segments are present, notably segments 2134, 2135 and 2136, so that segments 2132 and 2138 cannot be considered to form a couple according to the definition given above.

A distance D1 for the couple of segments 2132, 2134 is schematically illustrated in figure 2C. In preferred embodiments, the distance D1 between two segments of a given couple C1-Cn of the first superconducting nanowire 2110 is at least sufficient for routing the second superconducting nanowire 2210 twice. That is, in the distance D1, the second superconducting nanowire 2210 can present at least two segments, preferably parallel to each other, and/or preferably parallel to the segments of the couple defining distance D1.

As can be seen in the figures, this ensures that the first detector 2100 comprises concave regions, or folded regions, having a size D1 between two parallel segments delimiting the concave region. In this concave region, created by the first detector folding on itself, there is sufficient space for the second detector 2200 to also fold itself, so as to follow the first detector into and out of the concave region.

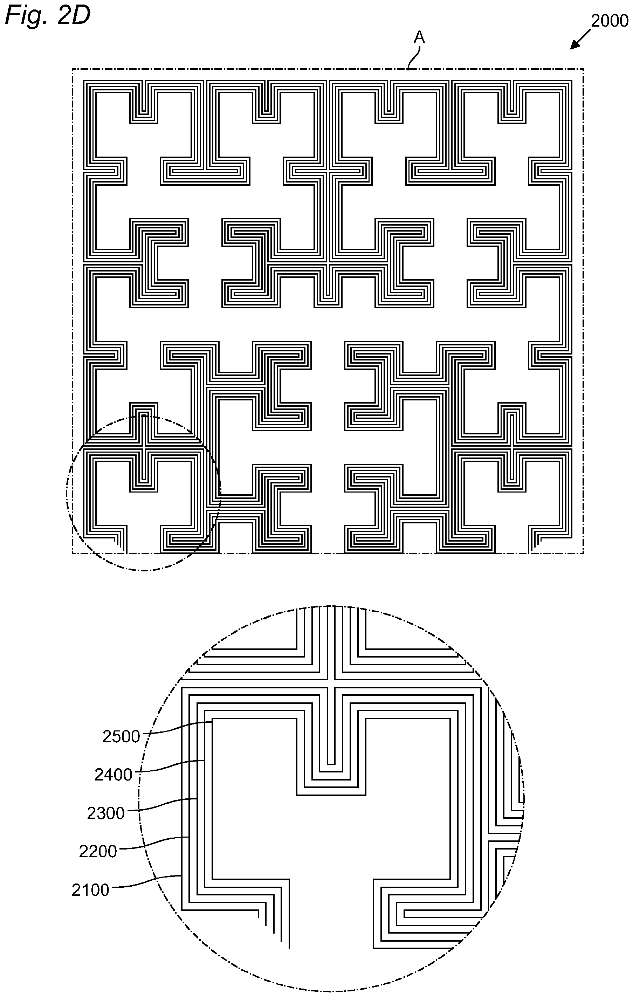

In embodiments in which the multi-pixel superconducting nanowire single-photon detector comprises, in addition to the first and second detectors 2100, 2200, a further one or more fractal superconducting nanowire single-photon detectors, such as the embodiment illustrated in figure 2D comprising three such additional detectors 2300, 2400, 2500, the distance D1 between two segments of the given couple C1-Cn can be configured to be at least sufficient for routing the second superconducting nanowire 2210, and the one or more further fractal superconducting nanowire single-photon detectors, preferably all of them, twice.

In other words, in a manner analogous to what has been already described for the detectors 2100, 2200, the distance D1 of detector D1 can be configured to allow the routing of detectors 2300, 2400, 2500, in addition to the already described routing of detector 2200, into the concave region defined by the detector 2100.

While the above requirement the distance D1 has been considered for a single couple of segments, in preferred embodiments it can also be applicable to a numerical majority, or to a length majority, of the segments of the first superconducting nanowire 2110.

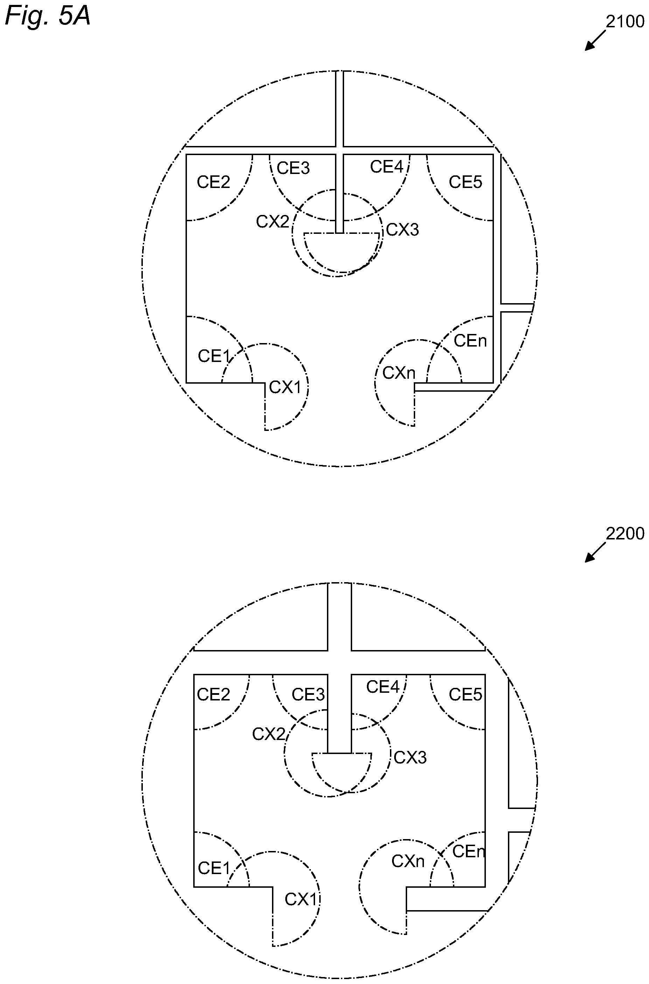

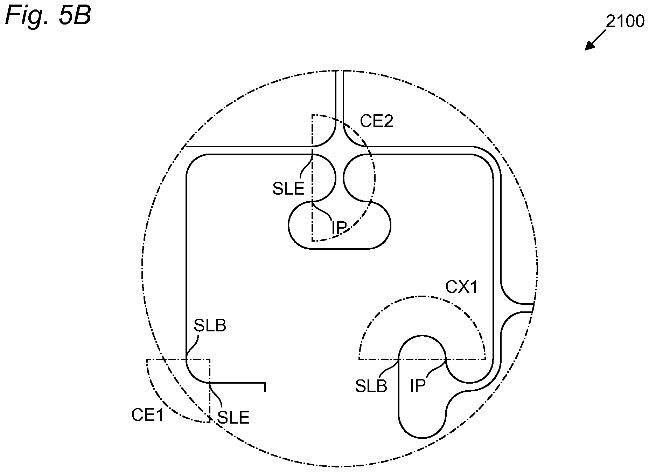

While the above embodiments have focused on the concept of a space, defined by the folding on itself of one detector, to be sized so as to leave a distance D1 sufficient for a similar folding of one or more additional detectors, so as to clarify one possible implementation of the concept of interleaving, in the following, in particular with reference to the embodiment of figures 5A and 5B, it will be described how the detectors have a plurality of convex and concave regions, and how those regions of different detectors overlap each other.

In particular, as visible in figure 5A, the first fractal superconducting nanowire single-photon detector 2100 defines a first plurality of concave regions CE1-CEn and convex regions CX1-CXn. Similarly, the second fractal superconducting nanowire single-photon detector 2200 defines a second plurality of concave regions CE1-CEn and convex regions CX1-CXn. A concave region has an angular extension of less than 180 degree, while a convex region has an angular extension of more than 180 degrees.

For instance, concave region CE1 is defined by segments 2131 and 2132. An exemplary convex region CX2 is defined by segments 2134, 2135. It will be clear to those skilled in the art that, given two segments, those can define both a convex region and a concave region, complementary to each other. For the determination of the convex and concave regions in the context of the present application, the portion on the first detector 2100 which, when starting from the start terminal 2120 and moving towards the end terminal 2121, faces the second detector 2200, in particular the segments of the second detector 2200 parallel to those of the first detector 2100, will be considered.

As visible in figure 5A, for at least a majority of first plurality of concave regions CE1-CEn and convex regions CX1-CXn, a given second concave region CE1-CEn or convex region CX1-CXn overlaps with a given first concave region CE1-CEn or, respectively, convex region CX1-CXn. That is, for instance, concave region CE1 of detector 2100 overlaps with concave region CE1 of detector 2200. Similarly, convex region CX2 of detector 2100 overlaps with convex region CX2 of detector 2200. As previously discussed, in alternative or additional embodiments, instead or in addition to the numerical majority, a length majority of the first superconducting nanowire 2110 can be considered, such that for at least the concave regions CE1-CEn and the convex regions CX1-CXn corresponding to a majority of the length of the first superconducting nanowire 2110, a corresponding region in the second detector 2200 overlaps the region in the first detector 2100. As previously discussed, the majority of the length does not need to be continuous and can be obtained by combining together non-continuous segments of the first detector 2100.

Preferably, two concave, or convex, regions can be seen as being overlapping if they have the same orientation in space, and/or if a center point of the concave/convex region of the second detector 2200 is included in the corresponding region of the first detector 2100, and/or if a given second region has a center point closer to a given first region than to any regions of the first plurality of concave regions CE1-CEn and convex regions CX1-CXn, and/or if the two regions have the same angular extension.

For instance, CE1 of detector 2100 and CE1 of detector 2200 have the same orientation in space. So do CE3 of detector 2100 and CE3, as well as CE5, of detector 2200. Additionally, for instance, the center point of CE1 of detector 2200 is comprised within concave region CE1 of detector 2100. Similarly, the center point of CE2 of detector 2200 is comprised within concave region CE1 of detector 2100. Further additionally, for instance, the center point of convex region CE2 of detector 2200 is, among all center points of the first plurality of concave regions CE1-CEn and convex regions CX1-CXn, closer to the center point of convex region CE2 of detector 2100. It is thus evident how, by employing one or more criteria identified above, the overlapping couples of first plurality of concave, convex, regions and of second concave, respectively convex, region can be identified.

The center point of a concave or convex region can be defined as the crossing point of the two, connected, segments which generate the given region. Thus, for instance, the center point of concave region CE1 is given by the intersection of segments 2131 and 2132. The angular extension of the region is then defined by the angle between the two segments. For the first detector 2100, the angle is measured on the side, from the center point, towards the closest point of the second detector 2200. For the second detector 2200, the angle is measured in the same direction.

In case of curved segments, reference is made to figure 5B. In this case, the center point of the concave, convex, region is the center point of a circle which best approximates the curved segment. The angular extension of the region is then defined by the angle between one segment, going from the center to the first point of the curved segment, as previously defined, and another segment, going from the center to the second point of the curved segment, as previously defined.

Such correspondence of concave and convex regions across the second and first detector 2100, 2200, allows the two fractal detectors to develop in a similar manner, with the second detector 2200 fitting into the space defined by the first detector in a manner which allows the second detector 2200 to follow the evolution of the first detector 2100. For instance, the second detector 2200, in convex regions such as region CE1, enters the convex region and then follows it creating a similar convex region CE1 being contained by CE1 of the first detector 2100. Further for instance, the second detector 2200, in convex regions such as region CX2, enters the convex region and then follows it creating a similar convex region CX2 being contained by CE1 of the first detector 2100.

Alternatively, or in addition, a concave region CE1-Cen, or a convex region CX1-CXn can be defined by a circular arc, having a center and an angle, or angular extension. The angular extension can be defined by two consecutive segments, if both segments are straight lines SL1-SL3, which form the region under consideration and the crossing of which forms the center. For curved lines, the angular extension can be defined by a circular interpolation of a curved line CL1-CL3 from a first point to a second point, wherein any of the first point and second point is an inflection point IP1-IP2 from concave to convex, or a non-differentiable point ND, or a beginning SL1B-SL3B or end SL1E-SL3E of a straight line SL1-SL3.

The concave and convex regions are considered overlapping if the respective angles are substantially similar and/or if the respective centers are at a maximum distance of less than 200nm, preferably less than 150nm, even more preferably less than 120nm and/or more than 20nm, preferably more than 45 nm, even preferably more than 70 nm.

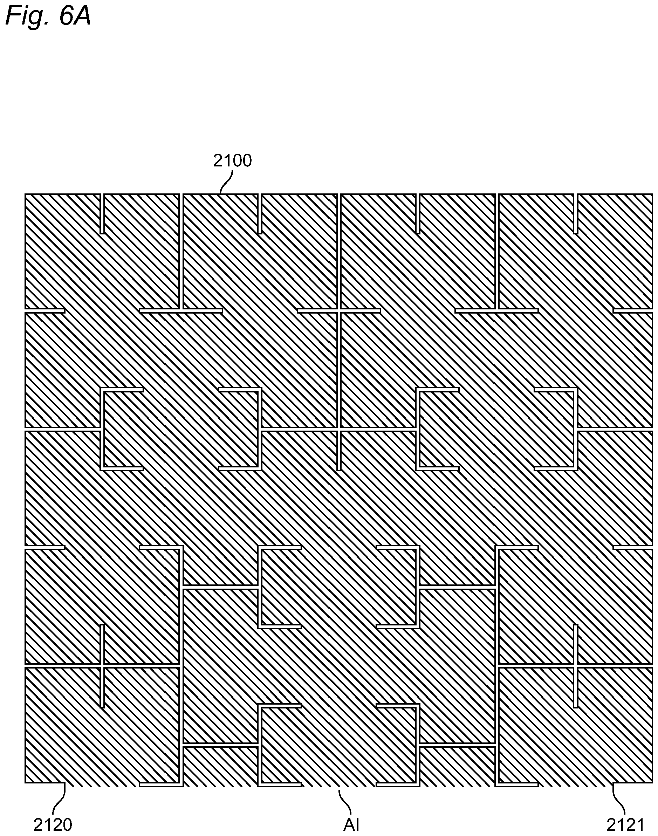

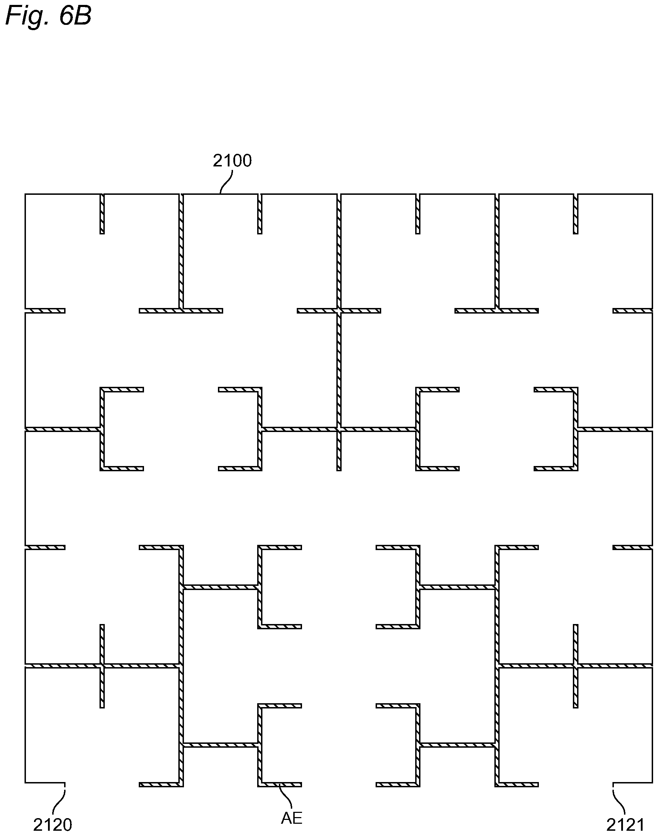

Figure 6A and 6B schematically illustrate an internal area AI, and an external area AE, defined by the fractal superconducting nanowire single-photon detector 2100. Similar areas, it will be understood, can be defined with the same criteria that will be discussed, for any detector.

In particular, the first superconducting nanowire 2110 separates the first area A1 on which is develops into an internal area AI, on a first side of the first superconducting nanowire 2110, and an external area AE, on a second side of the first superconducting nanowire 2110, opposite to the first side. That is, the internal area AI and the external area AE are complementary. In embodiments in which any of those areas extend beyond the first area A1, only the part of the respective area overlapping with the first area A1 can be considered. As a reminder, the first area A1 can be considered to be the area on which the first detector 2100 extends.

As visible in figures 6A, 6B, the internal area AI has a larger overlap with the first area A1 than the external area AE. This is one manner of defining the two areas. Alternatively, or in addition, the internal area can be defined to be the area on the side of the detector 2100 which, when starting from the start terminal 2120 and moving towards the end terminal 2121, faces the second detector 2200, in particular the segments of the second detector 2200 parallel to those of the first detector 2100. Consequently, the external area can be defined in an opposite manner.

As visible when comparing figure 6B with figure 2C, a majority of the second detector 2200 is placed in the internal area AI. Here the majority can be considered to be 51%, preferably 65%, even more preferably 80%.

With reference to the embodiments described above, it will also be clear that the concave and convex regions are, at least in a numerical majority and/or along a majority of the length of the detector, and preferably all of them, positioned in the internal area AI. Alternatively, or in addition, the distances D1 and D2 are, at least in a numerical majority and/or along a majority of the length of the detector, and preferably all of them, positioned in the internal area AI.

It has thus been described how a multi-pixel Superconducting Nanowire Single-Photon Detectors (SNSPD) can be implemented, in which several pixels, made by superconducting nanowires, are interleaved and extend as fractal, of space-filling curves, in a given area A, while enabling a uniform illumination of the various pixels and making and efficient use of the area A of the combined detectors.

### List of reference numerals

2100: fractal detector
2110: superconducting nanowire
2120, 2121: terminal
2130-213n: segments
A1: area
C1-Cn: couple of segments
D1: distance
2200: fractal detector
2210: superconducting nanowire
2220, 2221: terminal
2230-223n: segments
A2: area
2000: multi-pixel detector
D2: distance
2300-2500: fractal detector
3000: multi-pixel detector
3200: fractal detector
3210: superconducting nanowire
SL1-SL3: straight line
SL1B-SL3B: straight line beginning point
SL1E-SL3E: straight line end point
CL1-CL3: curved line
IP1-IP3: inflection point
ND: non-differentiable point
CE1-Cen: concave regions
CX1-CXn: convex regions
AI: internal area
AE: external area

## Claims

1. Multi-pixel superconducting nanowire single-photon detector (2000, 3000) comprising
a first fractal superconducting nanowire single-photon detector (2100) comprising a first superconducting nanowire (2110) extending between a first start terminal (2120) and a first end terminal (2121) across a first area (A1),
a second fractal superconducting nanowire single-photon detector (2200) comprising a second superconducting nanowire (2210) extending between a second start terminal (2220) and a second end terminal (2221) across a second area (A2),
wherein the second area (A2) overlaps with the first area (A1).

2. Multi-pixel superconducting nanowire single-photon detector (2000, 3000) according to claim 1, wherein
at least 50%, preferably at least 75%, even more preferably at least 90% of the second area (A2) overlaps with the first area (A1).

3. Multi-pixel superconducting nanowire single-photon detector (2000, 3000) according to claim 1 or 2, wherein
the first area (A1) includes the second area (A2).

4. Multi-pixel superconducting nanowire single-photon detector (2000, 3000) according to any of claims 1 to 3, wherein
the first fractal superconducting nanowire single-photon detector (2100) and the second fractal superconducting nanowire single-photon detector (2200) extend over the overlapping area (A) in an interleaved manner.

5. Multi-pixel superconducting nanowire single-photon detector (2000, 3000) according to any of claims 1 to 4, wherein
the first superconducting nanowire (2110) comprises a plurality of first segments (2130-213n),
the second superconducting nanowire (2210) comprises a plurality of second segments (2230-223n),
wherein, for at least a majority of the first segments (2130-213n), and/or for segments forming at least a majority of the length of the first superconducting nanowire (2110), a given second segment (2230-223n) is parallel to a given first segment (2130-213n).

6. Multi-pixel superconducting nanowire single-photon detector (2000, 3000) according to claim 5, wherein
a segment is defined as any of:
- a straight line (SL1-SL3) from a first point (SL1B-SL3B) to a second point (SL1E-SL3E) of the superconducting nanowire (2110, 2210)
- a curved line (CL1-CL3) from a first point to a second point of the superconducting nanowire (2110, 2210), wherein, for the definition of the curved line (CL1-CL3) any of the first point and second point is
∘ an inflection point (IP1-IP2) from concave to convex, or
∘ a non-differentiable point (ND), or
∘ a beginning (SL1B-SL3B) or end (SL1E-SL3E) of a straight line (SL1-SL3).

7. Multi-pixel superconducting nanowire single-photon detector (2000) according to claim 5 or 6 wherein, for at least a majority of the first segments (2130-213n), and/or for segments forming at least a majority of the length of the first superconducting nanowire (2110), a distance (D2) between the given second segment (2230-223n) and the respectively given parallel first segment (2130-213n) is less than 200nm, preferably less than 150nm, even more preferably less than 120nm and/or more than 20nm, preferably more than 45 nm, even preferably more than 70 nm.

8. Multi-pixel superconducting nanowire single-photon detector (2000, 3000) according to any previous claim, wherein
the first superconducting nanowire (2110) comprises a plurality of first segments (2130-213n),
wherein the first segments (2130-213n) comprise a plurality of couples (C1-Cn) of segments having at least a majority of the length of one, preferably both, segments substantially parallel to each other without other first segments (2130-213n) placed in between the couple (C1-Cn),
wherein a distance (D1) between two segments of a given couple (C1-Cn) is at least sufficient for routing the second superconducting nanowire (2210) twice.

9. Multi-pixel superconducting nanowire single-photon detector (2000, 3000) according to claim 8, further comprising one or more further fractal superconducting nanowire single-photon detectors,
wherein the distance (D1) between two segments of the given couple (C1-Cn) is at least sufficient for routing the second superconducting nanowire (2210), and the one or more further fractal superconducting nanowire single-photon detectors, twice.

10. Multi-pixel superconducting nanowire single-photon detector (2000) according to any previous claim wherein,
the first fractal superconducting nanowire single-photon detector (2100) defines a first plurality of concave regions (CE1-CEn) and convex regions (CX1-CXn),
the second fractal superconducting nanowire single-photon detector (2200) defines a second plurality of concave regions (CE1-CEn) and convex regions (CX1-CXn),
wherein, for at least a majority of the first plurality of concave regions (CE1-CEn) and of the convex regions (CX1-CXn), and/or for at least the concave regions (CE1-CEn) and the convex regions (CX1-CXn) corresponding to a majority of the length of the first superconducting nanowire (2110), a given second concave region (CE1-CEn) or convex region (CX1-CXn) overlaps with a given first concave region (CE1-CEn) or, respectively, convex region (CX1-CXn).

11. Multi-pixel superconducting nanowire single-photon detector (2000) according to claim 10 wherein,
each concave region (CE1-CEn) or convex region (CX1-CXn) is defined by a circular arc, having a center and an angle,
- defined by two consecutive segments, if both segments are straight lines (SL1-SL3),
- defined by a circular interpolation of a curved line (CL1-CL3) from a first point to a second point, wherein any of the first point and second point is
∘ an inflection point (IP1-IP2) from concave to convex, or
∘ a non-differentiable point (ND), or
∘ a beginning (SL1B-SL3B) or end (SL1E-SL3E) of a straight line (SL1-SL3).
and regions are considered overlapping if the respective angles are substantially similar and/or if the respective centers are at a maximum distance of less than 200nm, preferably less than 150nm, even more preferably less than 120nm and/or more than 20nm, preferably more than 45 nm, even preferably more than 70 nm.

12. Multi-pixel superconducting nanowire single-photon detector (2000) according to any previous claim wherein,
the first superconducting nanowire (2110) separates the first area (A1) into
- an internal area (AI), on a first side of the first superconducting nanowire (2110), and
- an external area (AE), on a second side of the first superconducting nanowire (2110), opposite to the first side,
wherein the internal area (AI) has a larger overlap with the first area (A1) than the external area (AE),
and wherein a majority of the second fractal superconducting nanowire single-photon detector (2200) is placed in the internal area (AI).
